# EUROPÄISCHE PATENTSCHRIFT

(11) **EP 2 108 805 B1**
(45) Veröffentlichungstag und Bekanntmachung des Hinweises auf die Patenterteilung: **01.05.2013**
(21) Anmeldenummer: 09155356.0
(22) Anmeldetag: 17.03.2009
(51) Int. Cl.: F02G 5/02, F25B 9/14

(54) **Verfahren und Vorrichtung zur Erhöhung der Energieeffizienz eines Kraftwerks**
Method and device for increasing the energy efficiency of a power plant
Procédé et dispositif destinés à l'augmentation du rendement énergétique d'une centrale

(30) Priorität: 09.04.2008 DE 102008017998
(43) Veröffentlichungstag der Anmeldung: 14.10.2009
(73) Patentinhaber: Siemens Aktiengesellschaft, 80333 München (DE)
(72) Erfinder: Danov, Vladimir, 91058 Erlangen (DE); Gromoll, Bernd, Dr., 91083 Baiersdorf (DE)

(56) Entgegenhaltungen:
- JP-A- 2006 009 579
- JP-A- 2006 170 022
- JP-A- 2007 315 680
- US-A1- 2007 090 723

## Beschreibung

Die Erfindung betrifft ein Verfahren und eine Vorrichtung zur Erhöhung der Energieeffizienz eines Kraftwerks.

Die in Kraftwerken produzierte Abwärme, die nach der Verbrennung des Brennstoffes und hinter der Turbine anfällt, beinhaltet große Energiereserven, insbesondere in Form von (Rest-)Wärme. Die Energiereserven können verwendet werden, um verschiedene Prozesse im Kraftwerk mit Energie zu versorgen. Bspw. ist es nicht unüblich, die Verbrennungsluft mit Hilfe der Abwärme des Kraftwerks vorzuwärmen, um eine effektivere Verbrennung zu erreichen. Auch andere Anwendungen sind denkbar, wie bspw. die Erzeugung von Strom für Gerätschaften des Kraftwerks oder zur Einspeisung in das Stromnetz.

Gängige Verfahren zur Nutzung der Abwärme sind aufwändig und wenig effizient. Es ist daher die Aufgabe der Erfindung, ein Verfahren anzugeben, mit dem eine Abwärmenutzung eines Kraftwerks mit hoher Effizienz möglich ist.

Diese Aufgabe wird durch die in den unabhängigen Ansprüchen angegebenen Erfindungen gelöst. Vorteilhafte Ausgestaltungen ergeben sich aus den abhängigen Ansprüchen.

Bei dem erfindungsgemäßen Verfahren wird der sog. thermoakustische Effekt in der Weise ausgenutzt, dass die Abwärme eines Kraftwerkes bspw. zur Erzeugung von Arbeitsleistung P für einen Kompressor und/oder zur Erzeugung von Kälte verwendet wird. Beim thermoakustischen Effekt werden zunächst durch eine Schallquelle, bspw. durch einen Lautsprecher, Schallwellen in einem Wärmeübertragungsmedium erzeugt wie es z.B. in DE 43 03 052 A1 oder JP 2007315680 beschrieben wird. Das Wärmeübertragungsmedium befindet sich in einem Resonanzrohr, in dessen Längsrichtung die Schallwellen abgestrahlt werden. Der thermoakustische Effekt besteht nun im Wesentlichen darin, dass zwischen bestimmten Positionen in der Längsrichtung des Rohres ein Temperaturgradient entsteht. Über geeignete Wärmetauscher, die an eben diesen Positionen angeordnet sind, kann Wärme an die Umgebung abgegeben bzw. Wärme aus der Umgebung aufgenommen werden.

Der thermoakustische Effekt lässt sich bspw. in der Weise umkehren, dass über entsprechende Wärmetauscher ein Temperaturgradient erzeugt wird, was zur Folge hat, dass in dem Medium Druckschwankungen ausgelöst werden.

Die vorliegende Erfindung nutzt diesen umgekehrten thermoakustischen Effekt in einem Ausführungsbeispiel in der Weise, dass in einer ersten thermoakustischen Maschine über einen ersten Wärmetauscher, der von einem Medium mit hoher Temperatur durchflossen wird, und einen zweiten Wärmetauscher, der von einem kühleren Medium durchflossen wird, in einem Wärmeübertragungsmedium Druckschwankungen erzeugt werden. Der besondere Vorteil der Erfindung besteht darin, dass das den ersten Wärmetauscher durchfließende heiße Medium der Abwärme des Kraftwerks entnommen wird. Insbesondere handelt es sich hierbei um die heißen Rauchgase und/oder den Dampf des Kraftwerks. Das den zweiten Wärmetauscher durchfließende Medium kann durch übliche Kühlmittel, d.h. Kühlwasser oder Kühlluft, realisiert sein.

Die Druckschwankungen im Wärmeübertragungsmedium wirken auf eine Vorrichtung zur Leistungserzeugung, die Komponenten beinhaltet, die durch die Druckschwankungen in Bewegung versetzt werden. Dies kann im einfachsten Fall ein Kolben sein, der entsprechend den Druckschwankungen eine lineare Bewegung in einem Zylinder durchführt, die bspw. über eine Kurbelwelle in eine Rotation umgewandelt wird.

Die so erzeugte Arbeitsleistung kann in Form von mechanischer oder elektrischer Leistung weitergeleitet werden. In dem Ausführungsbeispiel wird die Arbeitsleistung an einen Kompressor übertragen, der als Teil einer Luftzerlegungsanlage die zu zerlegende Luft verdichtet. Optimalerweise reicht allein die mit der ersten thermoakustischen Maschine erzeugbare Arbeitsleistung aus, den Kompressor anzutreiben. Anderenfalls ist es denkbar, eine weitere Energiequelle zur Versorgung des Kompressors hinzuzuschalten.

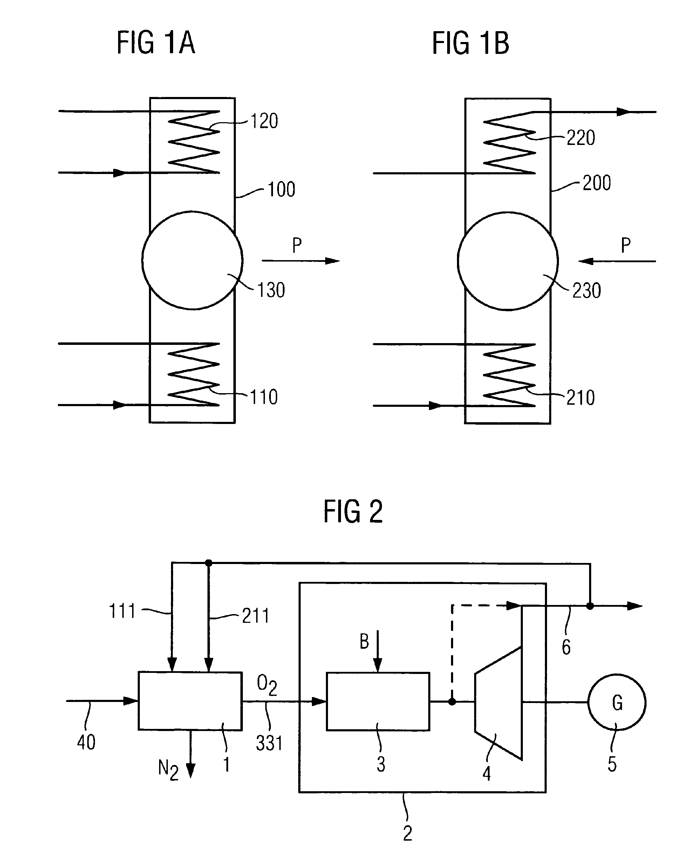

Die Figur 1 zeigt schematisch zwei Möglichkeiten der Nutzung des thermoakustischen Effekts. In der Figur 1a wird in einer Vorrichtung zur Leistungserzeugung 130, wie sie oben bereits kurz beschrieben wurde, dadurch eine Arbeitsleistung P erzeugt, dass ein erster Wärmetauscher 110 und ein zweiter Wärmetauscher 120 einer ersten thermoakustischen Maschine 100 von Medien durchflossen werden, die unterschiedliche Temperaturen aufweisen. In der Figur 1b dagegen arbeitet eine zweite thermoakustische Maschine 200 in an sich bekannter Weise als Kältemaschine in der Art, dass ein dritter Wärmetauscher 210 von einem Medium mit hoher Temperatur durchflossen wird, während eine Vorrichtung zur Leistungseinspeisung 230 Druckschwankungen in dem Wärmeübertragungsmedium der zweiten thermoakustischen Maschine erzeugt. Dies hat zur Folge, dass aufgrund des thermoakustischen Effekts ein einen vierten Wärmetauscher 220 durchfließendes Medium gekühlt wird. Die Vorrichtung zur Leistungseinspeisung 230 kann dabei im Prinzip aufgebaut sein wie die Vorrichtung zur Leistungserzeugung, mit dem Unterschied, dass der Kolben bzw. die Kurbelwelle im Falle der Vorrichtung zur Leistungseinspeisung von außen angetrieben wird.

Zusätzlich zum Einsatz der ersten thermoakustischen Maschine nutzt die vorliegende Erfindung den thermoakustische Effekt wie im Zusammenhang mit der Figur 1b beschrieben in einer Kälteanlage: Dabei besteht das den dritten Wärmetauscher 210 durchfließende, heiße Medium -wie im Fall des ersten Wärmetauschers 110- aus den heißen Rauchgasen und/oder dem Dampf aus der Abwärme des Kraftwerks. Das den vierten Wärmetauscher durchfließende Medium ist die bereits im Kompressor verdichtete Luft, die im vierten Wärmetauscher gekühlt wird.

Alternativ zur konkreten Nutzung für eine Luftzerlegungsanlage kann die erste thermoakustische Maschine bspw. auch zum Antrieb eines Generators zur Stromerzeugung eingesetzt werden, während die zweite thermoakustische Maschine allgemein zur Kühlung eines beliebigen Mediums einsetzbar ist.

Die Erfindung bietet demnach den besonderen Vorteil, dass der Energiebedarf bzw. die Energiebilanz einer Gesamtanlage bestehend aus dem Kraftwerk und bspw. der Luftzerlegungsanlage verbessert wird, da die zum Verdichten und/oder zum Abkühlen der Luft benötigte Energie der ansonsten nicht genutzten Abwärme des Kraftwerks entnommen wird.

Weitere Vorteile, Merkmale und Einzelheiten der Erfindung ergeben sich aus dem im Folgenden beschriebenen Ausführungsbeispiel sowie anhand der Zeichnungen.

Dabei zeigt:
- Figur 1a: eine erste Nutzungsmöglichkeit des thermoakustischen Effekts,
- Figur 1b: eine zweite Nutzungsmöglichkeit des thermoakustischen Effekts,
- Figur 2: ein Oxyfuel-Kraftwerk in schematischer Ansicht und
- Figur 3: eine erfindungsgemäße Luftzerlegungsanlage.

Zur Reduzierung der CO2-Emissionen von Kraftwerken sind verschiedene Verfahren bekannt, bei denen CO2 von den Brenn-oder Rauchgasen des Kraftwerks abgetrennt wird, um es anschließend separat zu speichern bzw. zu lagern. Die Trennung ist notwendig, da das Abgas der Kraftwerke nur zu einem relativ geringen Teil aus CO2 besteht: Den größten Teil bildet Stickstoff, der neben dem Sauerstoff in der Umgebungsluft enthalten ist. Da es nicht sinnvoll ist, den harmlosen Stickstoff geologisch zu speichern, muss das CO2 zunächst vom Stickstoff und ggf. anderen im Abgas enthaltenen Stoffen getrennt werden.

In nach dem Oxyfuel-Verfahren arbeitenden Oxyfuel-Kraftwerken wird der Brennstoff nicht mit Luft sondern mit reinem Sauerstoff verbrannt. Dies hat den Vorteil einer sehr hohen CO2-Konzentration im resultierenden Rauchgas, was die spätere CO2-Abtrennung vom Rauchgas wesentlich erleichtert. Dem Oxyfuel-Kraftwerk 2, in der Figur 2 beispielhaft symbolisiert durch einen Brenner 3 und eine Turbine 4, ist eine Luftzerlegungsanlage 1 vorgeschaltet, in der der zur Verbrennung benötigte Sauerstoff produziert wird. Dabei wird der Luftzerlegungsanlage 1 über eine Leitung 40 Luft zugeführt. Der aus der Luft abgeschiedene Sauerstoff wird über eine Leitung 331 an den Brenner 3 geleitet, wo schließlich der Brennstoff B mit reinem Sauerstoff verbrannt werden kann. Die Turbine 4 ist schließlich mit einem Generator 5 gekoppelt. Die Abwärme des Kraftwerks, insbesondere heiße Rauchgase und Dampf, wird über eine Abwärmeleitung 6 abgeführt.

Verfahren zur Luftzerlegung sind an sich bekannt. Üblicherweise wird die zu zerlegende Luft zunächst verdichtet, dann abgekühlt und schließlich in ihre Bestandteile aufgetrennt. Dazu werden je nach Hersteller der Luftzerlegungsanlage verschiedene Kompressoren, Kälteanlagen und Destillationskolonnen verwendet. Den bekannten Verfahren ist jedoch ein vergleichsweise hoher Energiebedarf gemein, so dass ein schlechter Gesamtwirkungsgrad des Kraftwerks resultiert.

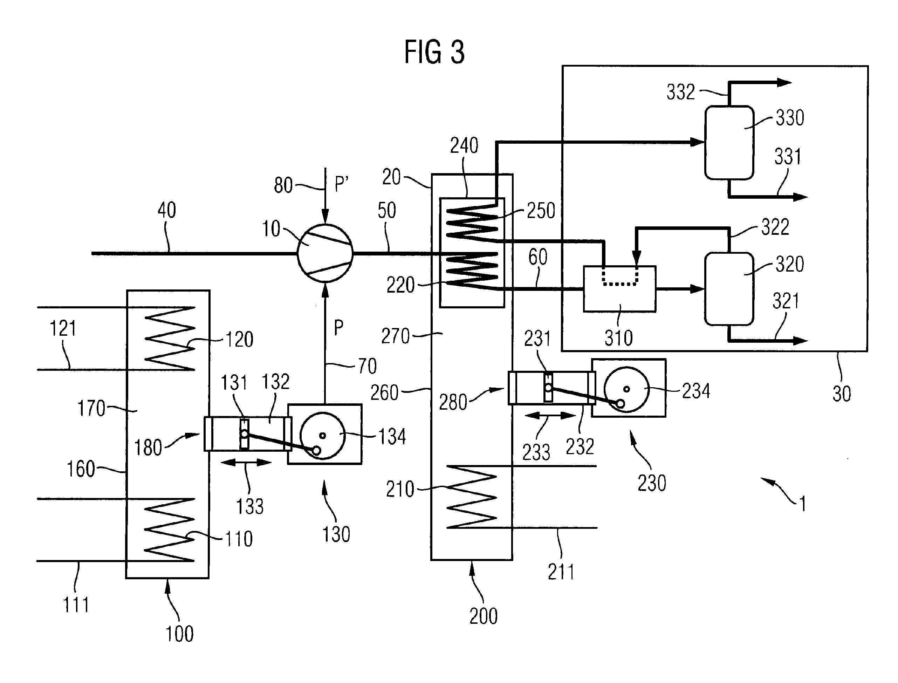

In der Figur 3 ist in schematischer Ansicht eine Luftzerlegungsanlage 1 dargestellt. Diese umfasst einen Kompressor 10 zum Verdichten der zu zerlegenden Luft, eine Kälteanlage 20 zum Abkühlen der vom Kompressor 10 verdichteten Luft sowie eine Abscheidevorrichtung 30. Die zu zerlegende Luft wird dem Kompressor 10 über eine Leitung 40 zugeführt und dort verdichtet. Die verdichtete Luft wird über eine weitere Leitung 50 an die Kälteanlage 20 weitergeleitet, wo sie in einer Kühleinrichtung 240 der Kälteanlage 20 abgekühlt wird. Die Kühleinrichtung 240 umfasst mindestens einen, in der vorliegenden Ausführungsform zwei Wärmetauscher 220, 250, die weiter unten beschrieben werden. Das Abkühlen der verdichteten Luft erfolgt im Wärmetauscher 220, im Folgenden bezeichnet als vierter Wärmetauscher 220. Der Wärmetauscher 250 wird als fünfter Wärmetauscher 250 bezeichnet.

Vom Ausgang der Kühleinrichtung 240 gelangt die nun verdichtete und abgekühlte Luft über eine Leitung 60 in die Abscheidevorrichtung 30, wo sie ggf. zunächst in einer weiteren Kühleinrichtung 310 weiter abgekühlt wird. In der Abscheidevorrichtung 30 wird die verdichtete und abgekühlte Luft in einem mehrstufigen Prozess in ihre Bestandteile (Stickstoff, Sauerstoff, Inertgase) zerlegt, wobei je Prozessstufe einer der Bestandteile abgetrennt und der verbleibende Rest zur nächsten Prozessstufe geleitet wird. Hierzu sind eine erste und eine zweite Destillationskolonne 320, 330 vorgesehen.

In der ersten Destillationskolonne 320 wird in an sich bekannter Weise Stickstoff abgeschieden und über eine Leitung 321 abgeleitet. Die verbleibende stickstoffarme Luft wird über eine Leitung 322 der zweiten Destillationskolonne 330 zugeführt. Im vorliegenden Ausführungsbeispiel wird die stickstoffarme Luft zwischengekühlt, bevor sie in die zweite Destillationskolonne 330 gelangt. Hierzu wird sie durch die weitere Kühleinrichtung 310 und/oder durch den in der Kühleinrichtung 240 der Kälteanlage 20 vorgesehenen fünften Wärmetauscher 250 geleitet.

In der zweiten Destillationskolonne 330 wird der in der stickstoffarmen Luft enthaltene Sauerstoff in an sich bekannter Weise abgeschieden und über eine Leitung 331 abgeleitet. Als Rest dieses Prozesses verbleiben lediglich inerte Gase, die über die Leitung 332 abgeführt werden.

Der über die Leitung 331 abgeführte Sauerstoff wird nun wie bereits in der Figur 2 angedeutet in einem Oxyfuel-Kraftwerk 2 eingesetzt, um einen Brennstoff B in einem Brenner 3 mit reinem Sauerstoff zu verbrennen und so die gewünschte hohe CO2-Konzentration in den Rauchgasen zu erzielen.

Erfindungsgemäß werden in der Luftzerlegungsanlage 1 eine erste 100 und/oder eine zweite thermoakustische Maschine 200 eingesetzt, die über die Abwärme des Kraftwerks 2 betrieben werden.

Die erste thermoakustischer Maschine 100 erzeugt zumindest einen Teil der vom Kompressor 10 zum Verdichten der zu zerlegenden Luft benötigten Arbeitsleistung P. Hierzu weist die erste thermoakustische Maschine 100 einen ersten Behälter 160 auf, der bspw. als Resonanzrohr ausgebildet sein kann und der einen ersten Wärmetauscher 110, einen zweiten Wärmetauscher 120 und ein erstes Wärmeübertragungsmedium 170, bspw. Luft, umfasst. Der erste 110 und der zweite Wärmetauscher 120 stehen über das erste Wärmeübertragungsmedium 170 in thermischem Kontakt.

Der erste Wärmetauscher 110 wird nun von einem ersten Medium und der zweite Wärmetauscher 120 von einem zweiten Medium durchflossen, wobei die Temperatur des ersten Mediums höher ist als die Temperatur des zweiten Mediums. Insbesondere wird der erste Wärmetauscher 110 erfindungsgemäß über eine Zuleitung 111 mit der Abwärme des Oxyfuel-Kraftwerks, insbesondere mit heißem Rauchgas und/oder Dampf, gespeist. Hierzu ist die Zuleitung 111 mit der Abwärmeleitung 6 des Kraftwerks 2 verbunden. Der zweite Wärmetauscher 120 wird über eine Zuleitung 121 mit einem Kühlmittel, insbesondere mit Kühlluft oder Kühlwasser, versorgt. Wie in der Figur 2 angedeutet kann die Abwärme bspw. hinter dem Brenner 3 und/oder hinter der Turbine 4 entnommen werden.

Der Temperaturgradient zwischen dem ersten 110 und dem zweiten Wärmetauscher 120 resultiert aufgrund des thermoakustischen Effekts darin, dass im Resonanzrohr 160 in dem ersten Wärmeübertragungsmedium 170 Druckschwankungen erzeugt werden. Eine Vorrichtung zur Leistungserzeugung 130 ist mit der ersten thermoakustischen Maschine 100 derart gekoppelt, dass sich diese Druckschwankungen auf die Vorrichtung zur Leistungserzeugung 130 auswirken können.

Die Vorrichtung zur Leistungserzeugung 130 kann bspw. einen Kolben 131, einen Zylinder 132 und eine Kurbelwelle 134 umfassen, wobei der Zylinder 132 an eine Öffnung 180 im Resonanzrohr 160 angesetzt ist, so dass durch die Druckschwankungen Kräfte auf den Kolben 131 erzeugt werden. Der Kolben 131 bewegt sich dadurch in Richtung des Pfeils 133, treibt die Kurbelwelle 134 an und erzeugt so eine Arbeitsleistung P, die schließlich über eine Leitung 70 an den Kompressor 10 übertragen wird. Dabei ist denkbar, mittels der Kurbelwelle 134 einen Generator (nicht dargestellt) zur Stromerzeugung zu betreiben und mit dem erzeugten Strom den Kompressor 10 zu versorgen. In dem Fall ist die Leitung 70 eine stromführende Verbindung. Alternativ kann die Kurbelwelle 134 mechanisch mit einer Welle des Kompressors 10 verbunden sein, so dass ein direkter Antrieb des Kompressors stattfindet. In diesem Fall stellt die Leitung 70 eine mechanische Verbindung zwischen der Vorrichtung zur Leistungserzeugung 130 und dem Kompressor 10 dar. Generell lässt sich verallgemeinern, dass die Vorrichtung zur Leistungserzeugung 130 in der Lage ist, die Druckschwankungen im Resonanzrohr 160 aufzunehmen und sie in eine Arbeitsleistung P umzusetzen. Einem Fachmann sind derartige Vorrichtungen zur Leistungserzeugung bekannt. Bspw. kann ein Linearkompressor verwendet werden, die die Vorrichtung zur Leistungserzeugung 130 und den Kompressor 10 in sich vereint.

Über eine optionale Zuleitung 80 kann dem Kompressor 10 ggf. eine zusätzlich Arbeitsleistung P' zugeführt werden, falls die durch die erste thermoakustische Maschine 100 erzeugte Arbeitsleistung P nicht ausreicht, um die zu zerlegende Luft hinreichend zu verdichten.

Alternativ oder zusätzlich zum Einsatz der ersten thermoakustischen Maschine 100 kann in der Kälteanlage 20 eine zweite thermoakustische Maschine 200 als Kältemaschine eingesetzt werden. Die zweite thermoakustische Maschine 200 wird zum Abkühlen der im Kompressor 10 verdichteten Luft verwendet. Hierzu weist die zweite thermoakustische Maschine 200 einen zweiten Behälter bzw. ein zweites Resonanzrohr 260 auf, das einen dritten Wärmetauscher 210, die bereits oben eingeführte Kühleinrichtung 240 mit dem vierten 220 und fünften Wärmetauscher 250 sowie ein zweites Wärmeübertragungsmedium 270, bspw. Luft, beinhaltet. Der dritte Wärmetauscher 210 steht mit der Kühleinrichtung 240 bzw. mit dem vierten 220 und dem fünften Wärmetauscher 250 über das zweite Wärmeübertragungsmedium 270 in thermischem Kontakt.

Eine Vorrichtung zur Leistungseinspeisung 230 ist mit der zweiten thermoakustischen Maschine 200 bzw. mit deren Resonanzrohr 260 bspw. über eine Öffnung 280 derart gekoppelt, dass Druckschwankungen im zweiten Wärmeübertragungsmedium 270 erzeugt oder schon vorhandene Druckschwankungen verstärkt werden können. Die Vorrichtung zur Leistungseinspeisung 230 kann bspw. einen Kolben 231 und einen Zylinder 232 umfassen, wobei der Zylinder 232 an die Öffnung 280 im Resonanzrohr 260 angesetzt ist. Der Kolben 231 wird bspw. über eine Kurbelwelle 234 zur Erzeugung der Druckschwankungen in Richtung des Pfeils 233 bewegt. Alternativ kann die Vorrichtung zur Leistungseinspeisung 230 auch als Schallquelle, bspw. als Lautsprecher o.ä. ausgebildet sein. Wesentlich ist nur, dass Druckschwankungen im zweiten Wärmeübertragungsmedium 270 erzeugt werden können.

Der dritte Wärmetauscher 210 wird nun von einem dritten Medium mit hoher Temperatur durchflossen. Insbesondere wird der dritte Wärmetauscher 210 erfindungsgemäß über eine Zuleitung 211 wie der erste Wärmetauscher 110 mit der Abwärme des Oxyfuel-Kraftwerks 2, insbesondere mit heißem Rauchgas und/oder Dampf, gespeist. Hierzu ist die Zuleitung 211 mit der Abwärmeleitung 6 des Kraftwerks 2 verbunden. Wie in der Figur 2 angedeutet kann die Abwärme bspw. hinter dem Brenner 3 und/oder hinter der Turbine 4 entnommen werden.

Der vierte Wärmetauscher 220 wird von der im Kompressor 10 verdichteten Luft durchflossen. Durch den im Zusammenhang mit der Figur 1b beschriebenen thermoakustischen Effekt wird erreicht, dass die Luft im vierten Wärmetauscher 220 gekühlt wird. Zusätzlich wird im fünften Wärmetauscher 250 die aus der ersten Destillationskolonne 320 kommende stickstoffarme Luft zwischengekühlt.

Wie bereits beschrieben gelangt die im ersten Wärmetauscher 220 gekühlte Luft anschließend über die Leitung 60 in die Abscheidevorrichtung 30, wo schließlich der Sauerstoff für die Verbrennung abgeschieden wird.

Die obigen Ausführungen beziehen sich auf das Verdichten und das Abkühlen von Luft. Es ist jedoch klar, dass die erfindungsgemäße Vorrichtung und das Verfahren nicht nur für die Bearbeitung von Luft einsetzbar sind, sondern sich generell eignen, ein insbesondere gasförmiges Arbeitsmedium zu verdichten und abzukühlen.

Weiterhin ist die erste thermoakustische Maschine 100 generell geeignet, die in der Abwärme des Kraftwerks 2 enthaltene Energie in eine mechanische oder elektrische Arbeitsleistung P umzuwandeln, die durch einen oder mehrere Verbraucher, bspw. Pumpen, an beliebiger Stelle eingesetzt werden kann. Das angeführte Beispiel der Luftzerlegungsanlage ist lediglich eine konkrete Anwendung.

Besonders vorteilhaft lassen sich das Verfahren und die Vorrichtung zur Luftzerlegung für ein Oxyfuel-Kraftwerk nutzen, da dessen Abwärme verwendet wird, um einen der benötigten Rohstoffe zu gewinnen.

## Patentansprüche

1. Verfahren zur Abwärmenutzung eines Kraftwerks (2), insbesondere eines Oxyfuel-Kraftwerks, **dadurch gekennzeichnet, dass** zumindest ein Teil einer in dem Kraftwerk (2) produzierten Abwärme, insbesondere Rauchgas und/oder Dampf, einer zweiten thermoakustischen Maschine (200) zugeführt wird, wobei die zweite thermoakustische Maschine (200) einen dritten Wärmetauscher (210) und eine Kühleinrichtung (240) mit einem vierten Wärmetauscher (220) beinhaltet, die über ein zweites Wärmeübertragungsmedium (270) in thermischem Kontakt stehen, **dadurch gekennzeichnet, dass** komprimierte Luft den vierten Wärmetauscher (220) durchläuft und dabei durch den thermoakustischen Effekt gekühlt wird.

2. Verfahren nach Anspruch 1, **dadurch gekennzeichnet, dass** zumindest ein Teil der in dem Kraftwerk (2) produzierten Abwärme, insbesondere Rauchgas und/oder Dampf, zusätzlich auch einer ersten thermoakustischen Maschine (100) zugeführt wird, wobei mit der ersten thermoakustischen Maschine (100) eine insbesondere mechanische oder elektrische Arbeitsleistung (P) erzeugt wird.

3. Verfahren nach Anspruch 2, **dadurch gekennzeichnet, dass** die erzeugte Arbeitsleistung (P) einem Kompressor (10) zum Verdichten der Luft und/oder einem anderen Verbraucher zugeführt wird.

4. Verfahren nach einem der Ansprüche 2 bis 3, **dadurch gekennzeichnet, dass** die erste thermoakustische Maschine (100) einen ersten Wärmetauscher (110) und einen zweiten Wärmetauscher (120) beinhaltet, die über ein erstes Wärmeübertragungsmedium (170) in thermischem Kontakt stehen, wobei in dem ersten Wärmeübertragungsmedium (170) durch den thermoakustischen Effekt Druckschwankungen erzeugt werden, welche auf eine Vorrichtung zur Leistungserzeugung (130) wirken und dort in die Arbeitsleistung (P) umgesetzt werden.

5. Verfahren nach Anspruch 4, **dadurch gekennzeichnet, dass** dem ersten Wärmetauscher (110) Abwärme des Kraftwerks (2) zugeführt wird und dem zweiten Wärmetauscher (120) ein Kühlmittel, insbesondere Kühlluft oder Kühlwasser, zugeführt wird.

6. Verfahren nach einem der vorhergehenden Ansprüche, **dadurch gekennzeichnet, dass** dem dritten Wärmetauscher (210) Abwärme des Kraftwerks (2) zugeführt wird und eine Vorrichtung zur Leistungseinspeisung (230) Druckschwankungen in dem zweiten Wärmeübertragungsmedium (270) erzeugt oder bereits vorhandene Druckschwankungen verstärkt.

7. Verfahren nach einem der vorhergehenden Ansprüche, **dadurch gekennzeichnet, dass** die Abwärme des Kraftwerks (2) hinter einem Brenner (3) und/oder hinter einer Turbine (4) des Kraftwerks (2) entnommen wird.

8. Verfahren nach einem der vorhergehenden Ansprüche, **dadurch gekennzeichnet, dass** die Luft verdichtet und gekühlt und anschließend in eine Abscheidevorrichtung (30) geleitet wird, wo es in einem mehrstufigen Prozess in seine Bestandteile (N2, 02, Inertgase) zerlegt wird, wobei je Prozessstufe einer der Bestandteile abgetrennt und ein verbleibendes Restmedium zur nächsten Prozessstufe geleitet wird.

9. Verfahren nach Anspruch 8, **dadurch gekennzeichnet, dass** eine zwischen zwei Prozessstufen erfolgende Kühlung des Restmediums in einem fünften Wärmetauscher (250) stattfindet, der in der Kühleinrichtung (240) der zweiten thermoakustischen Maschine (200) untergebracht ist.

10. Kraftwerk (2), insbesondere Oxyfuel-Kraftwerk, **dadurch gekennzeichnet, dass** eine Abwärmeleitung (6) des Kraftwerks (2) zum Ableiten zumindest eines Teils einer in dem Kraftwerk (2) produzierten Abwärme mit einer zweiten thermoakustischen Maschine (200) verbunden ist, wobei
- die zweite thermoakustische Maschine (200) einen dritten Wärmetauscher (210), eine Kühleinrichtung (240) mit einem vierten Wärmetauscher (220) zum Abkühlen von komprimierter Luft und ein zweites Wärmeübertragungsmedium (270) beinhaltet, wobei der dritte Wärmetauscher (210) über das zweite Wärmeübertragungsmedium (270) mit der Kühleinrichtung (240) und dem vierten Wärmetauscher (220) in thermischem Kontakt steht,
**dadurch gekennzeichnet, dass**
- eine Zuleitung (211) zum dritten Wärmetauscher (210) mit der Abwärmeleitung (6) verbunden ist und
- der vierte Wärmetauscher (220) von der komprimierten Luft durchflossen ist.

11. Kraftwerk nach Anspruch 10, **dadurch gekennzeichnet, dass** zusätzlich eine erste thermoakustische Maschine (100) vorgesehen ist, wobei die Abwärmeleitung (6) des Kraftwerks (2) zum Ableiten zumindest eines Teils der in dem Kraftwerk (2) produzierten Abwärme mit der ersten thermoakustischen Maschine (100) verbunden ist und wobei die erste thermoakustische Maschine (100) über eine Leitung (70) zur Übertragung einer Arbeitsleistung (P) mit einem Kompressor (10) zum Verdichten der Luft und/oder mit einem anderen Verbraucher verbunden ist.

12. Kraftwerk nach Anspruch 11, **dadurch gekennzeichnet, dass**
- die erste thermoakustische Maschine (100) einen ersten Wärmetauscher (110), einen zweiten Wärmetauscher (120) und ein erstes Wärmeübertragungsmedium (170) umfasst, wobei der erste und der zweite Wärmetauscher (110, 120) über das erste Wärmeübertragungsmedium (170) in thermischem Kontakt stehen,
- eine Zuleitung (111) zum ersten Wärmetauscher (110) mit der Abwärmeleitung (6) verbunden ist und
- der zweite Wärmetauscher (120) über eine Zuleitung (121) mit einem Kühlmittel versorgt ist.

13. Kraftwerk nach Anspruch 11 oder 12, **dadurch gekennzeichnet, dass** eine Vorrichtung zur Leistungserzeugung (130) derart an die erste thermoakustische Maschine (100) gekoppelt ist, dass sich Druckschwankungen des ersten Wärmeübertragungsmediums (170), insbesondere erzeugt durch den thermoakustischen Effekt, auf die Vorrichtung zur Leistungserzeugung (130) auswirken,
wobei die Vorrichtung zur Leistungserzeugung (130) ausgebildet ist, um die Druckschwankungen in eine Arbeitsleistung (P) umzusetzen.

14. Kraftwerk nach Anspruch 13, **dadurch gekennzeichnet, dass** die Vorrichtung zur Leistungserzeugung (130)
- gemeinsam mit dem Kompressor (10) als Linearkompressor ausgebildet ist oder
- Komponenten (131, 132, 134), insbesondere einen Kolben (131), einen Zylinder (132) und eine Kurbelwelle (134), beinhaltet, die zur Erzeugung der Arbeitsleistung (P) durch die Druckschwankungen in Bewegung versetzbar sind.

15. Kraftwerk nach Anspruch 13 oder 14, **dadurch gekennzeichnet, dass** die Vorrichtung zur Leistungserzeugung (130) über eine Leitung (70) zur Übertragung der erzeugten Arbeitsleistung (P) mit dem Kompressor (10) und/oder mit dem anderen Verbraucher verbunden ist.

16. Kraftwerk nach einem der Ansprüche 10 bis 15, **dadurch gekennzeichnet, dass** eine Vorrichtung zur Leistungseinspeisung (230) derart ausgebildet und an die zweite thermoakustische Maschine (200) gekoppelt ist, dass Druckschwankungen in dem zweiten Wärmeübertragungsmedium (270) erzeugt oder bereits vorhandene Druckschwankungen verstärkt werden.

17. Kraftwerk nach Anspruch 16, **dadurch gekennzeichnet, dass** Vorrichtung zur Leistungseinspeisung (230) eine Schallquelle ist oder Komponenten (231, 232, 234), insbesondere einen Kolben (231), einen Zylinder (232) und eine Kurbelwelle (234), beinhaltet, die zur Erzeugung der Druckschwankungen in dem zweiten Wärmeübertragungsmedium (230) in Bewegung versetzbar sind.

18. Kraftwerk nach einem der Ansprüche 11 bis 17, **dadurch gekennzeichnet, dass** ein Ausgang des Kompressors (10) über eine Leitung (60) für die komprimierte Luft mit einem Eingang des vierten Wärmetauschers (220) verbunden ist.

## Claims

1. Method for the use of waste heat from a power plant (2), in particular an oxyfuel power plant, **characterised in that** at least part of a waste heat produced in the power plant (2), in particular flue gas and/or steam, is fed to a second thermoacoustic machine (200), wherein the second thermoacoustic machine (200) contains a third heat exchanger (210) and a cooling facility (240) with a fourth heat exchanger (220) which are in thermal contact by way of a second heat transmission medium (270), **characterised in that** compressed air passes through the fourth heat exchanger (220) and in the process is cooled by the thermoacoustic effect.

2. Method according to claim 1, **characterised in that** at least part of the waste heat produced in the power plant (2), in particular flue gas and/or steam, is additionally also fed to a first thermoacoustic machine (100), wherein an in particular mechanical or electrical work output (P) is generated with the first thermoacoustic machine (100).

3. Method according to claim 2, **characterised in that** the generated work output (P) is fed to a compressor (10) for compressing the air and/or another consumer.

4. Method according to one of claims 2 to 3, **characterised in that** the first thermoacoustic machine (100) contains a first heat exchanger (110) and a second heat exchanger (120), which are in thermal contact via a first heat transmission medium (170), wherein pressure fluctuations are generated in the first heat transmission medium (170) by means of the thermoacoustic effect, which have an effect on a device for power generation (130) and are there converted into the work output (P).

5. Method according to claim 4, **characterised in that** waste heat from the power plant (2) is fed to the first heat exchanger (110) and a coolant, in particular cooling air or cooling water, is fed to the second heat exchanger (120).

6. Method according to one of the preceding claims, **characterised in that** waste heat from the power plant (20) is fed to the third heat exchanger (210) and a device for the supply of power (230) generates pressure fluctuations in the second heat transmission medium (270) or strengthens pressure fluctuations already existing.

7. Method according to one of the preceding claims, **characterised in that** the waste heat from the power plant (2) is removed behind a burner (3) and/or behind a turbine (4) of the power plant (2).

8. Method according to one of the preceding claims, **characterised in that** the air is compressed and cooled and subsequently directed into a separation device (30), where it is broken down into its components (N2, 02, inert gases) in a multistage process, where each process stage separates out one its components, and a remaining residual medium is directed to the next process stage.

9. Method according to claim 8, **characterised in that** a cooling of the residual medium taking place between two process stages is performed in a fifth heat exchanger (250), which is accommodated in the cooling facility (240) of the second thermoacoustic machine (200).

10. Power plant (2), in particular oxyfuel power plant, **characterised in that** a waste heat line (6) of the power plant (2) for discharging at least part of a waste heat produced in the power plant (2) is connected to a second thermoacoustic machine (200), wherein
- the second thermoacoustic machine (200) contains a third heat exchanger (110), a cooling facility (240) with a fourth heat exchanger (220) for cooling compressed air and a second heat transmission medium (27), wherein the third heat exchanger (210) is in thermal contact with the cooling facility (240) and the fourth heat exchanger (220) via the second heat transmission medium (270),
**characterised in that**
- a supply line (111) to the third heat exchanger (110) is connected with the waste heat line (6) and
- the compressed air flows through the fourth heat exchanger (120).

11. Power plant according to claim 10, **characterised in that** a first thermoacoustic machine (100) is also provided, wherein the waste heat line (6) of the power plant (2) for discharging at least one part of the waste heat produced in the power plant (2) is connected to the first thermoacoustic machine (100) and wherein the first thermoacoustic machine (100) is connected to a compressor (10) for compressing the air and/or to another consumer via a line (70) for transmitting a work output (P).

12. Power plant according to claim 11, **characterised in that**
- the first thermoacoustic machine (200) comprises a first heat exchanger (210), a second heat exchanger (120) and a first heat transmission medium (170), where the first and second heat exchanger (110, 120) are in thermal contact via the first heat transmission medium (170),
- a supply line (111) to the first heat exchanger (110) is connected with the waste heat line (6) and
- the second heat exchanger (220) is supplied with coolant via a supply line (121).

13. Power plant according to claim 11 or 12, **characterised in that** a device for power generation (130) is coupled to the first thermoacoustic machine (100) in such a way that pressure fluctuations in the first heat transmission medium (170), in particular generated by the thermoacoustic effect, have an effect on the device for power generation (130),
wherein the device for power generation (130) is embodied in order to convert pressure fluctuations into a work output (P).

14. Power plant according to claim 13, **characterised in that** the device for power generation (130),
- is embodied together with the compressor (10) as a linear compressor or
- contains components (131, 132, 134), in particular a piston (131), a cylinder (132) and a crankshaft (134), which, in order to generate the work output (P), can be made to move by means of the pressure fluctuations.

15. Power plant according to claim 13 or 14, **characterised in that** the device for power generation (130) is connected to the compressor (10) and/or the other consumer via a line (70) for transmitting the generated work output (P).

16. Power plant according to one of claims 10 to 15, **characterised in that** a device for the supply of power (230) is embodied and coupled to the second thermoacoustic machine (200) such that pressure fluctuations are generated in the second heat transmission medium (270) or already existing pressure fluctuations are strengthened.

17. Power plant according to claim 16, **characterised in that** the device for the supply of power (230) is a sound source or contains components (231, 232, 234), in particular a piston (231), a cylinder (232) and a crankshaft (234), which, in order to generate the pressure fluctuations in the second heat transmission medium (230), can be made to move.

18. Power plant according to one of claims 11 to 17, **characterised in that** an output of the compressor (10) is connected to an input of the fourth heat exchanger (220) via a line (60) for the compressed air.

## Revendications

1. Procédé d'utilisation de la chaleur perdue d'une centrale (2), en particulier d'une centrale Oxyfuel, **caractérisé en ce qu'**au moins une partie de la chaleur perdue produite dans la centrale (2), en particulier des gaz de fumées et/ou de la vapeur, est amenée à une deuxième machine thermoacoustique (200), la deuxième machine thermoacoustique (200) comprenant un troisième échangeur de chaleur (210) et un dispositif de refroidissement (240) avec un quatrième échangeur de chaleur (220) qui sont en contact thermique via un deuxième fluide de transfert de chaleur (270), **caractérisé en ce que** de l'air comprimé parcourt le quatrième échangeur de chaleur (220) et est refroidi par l'effet thermoacoustique.

2. Procédé selon la revendication 1, **caractérisé en ce qu'**au moins une partie de la chaleur perdue produite dans la centrale (2), en particulier des gaz de fumées et/ou de la vapeur, est amenée en outre également à une première machine thermoacoustique (100), la première machine thermoacoustique (100) permettant de générer une puissance de travail (P) en particulier mécanique ou électrique.

3. Procédé selon la revendication 2, **caractérisé en ce que** la puissance de travail (P) générée est amenée à un compresseur (10) destiné à comprimer l'air et/ou à un autre consommateur.

4. Procédé selon l'une des revendications 2 à 3, **caractérisé en ce que** la première machine thermoacoustique (100) comprend un premier échangeur de chaleur (110) et un deuxième échangeur de chaleur (120) qui sont en contact thermique via un premier fluide de transfert de chaleur (170), dans le premier fluide de transfert de chaleur (170) étant générées par l'effet thermoacoustique des fluctuations de pression qui agissent sur un dispositif de génération de puissance (130) et qui y sont converties en ladite puissance de travail (P).

5. Procédé selon la revendication 4, **caractérisé en ce que** le premier échangeur de chaleur (110) se voit amener la chaleur perdue de la centrale (2) et le deuxième échangeur de chaleur (120) se voit amener un fluide de refroidissement, en particulier de l'air de refroidissement ou de l'eau de refroidissement.

6. Procédé selon l'une des revendications précédentes, **caractérisé en ce que** le troisième échangeur de chaleur (210) se voit amener la chaleur perdue de la centrale (2) et un dispositif d'alimentation en puissance (230) génère des fluctuations de pression dans le deuxième fluide de transfert de chaleur (270) ou renforce les fluctuations de pression déjà existantes.

7. Procédé selon l'une des revendications précédentes, **caractérisé en ce que** la chaleur perdue de la centrale (2) est extraite en aval d'un brûleur (3) et/ou en aval d'une turbine (4) de la centrale (2).

8. Procédé selon l'une des revendications précédentes, **caractérisé en ce que** l'air est comprimé et refroidi puis conduit dans un dispositif séparateur (30) où il est décomposé en ses constituants (N2, 02, gaz inertes) dans un processus en plusieurs étapes, dans chaque étape de processus l'un des constituants étant séparé et un fluide résiduel restant étant conduit vers l'étape de processus suivante.

9. Procédé selon la revendication 8, **caractérisé en ce qu'**un refroidissement du fluide résiduel entre deux étapes de processus a lieu dans un cinquième échangeur de chaleur (250), logé dans le dispositif de refroidissement (240) de la deuxième machine thermoacoustique (200).

10. Centrale (2), en particulier centrale Oxyfuel, **caractérisée en ce qu'**une conduite (6) pour la chaleur perdue de la centrale (2), servant à évacuer au moins une partie de la chaleur perdue produite dans la centrale (2), est reliée à une deuxième machine thermoacoustique (200),
- la deuxième machine thermoacoustique (200) comprenant un troisième échangeur de chaleur (210), un dispositif de refroidissement (240) avec un quatrième échangeur de chaleur (220) destiné à refroidir l'air comprimé et un deuxième fluide de transfert de chaleur (270), le troisième échangeur de chaleur (210) étant en contact thermique avec le dispositif de refroidissement (240) et le quatrième échangeur de chaleur (220) via le deuxième fluide de transfert de chaleur (270), **caractérisée en ce que**
- une conduite (211) menant au troisième échangeur de chaleur (210) est reliée à la conduite (6) pour la chaleur perdue et
- le quatrième échangeur de chaleur (220) est parcouru par l'air comprimé.

11. Centrale selon la revendication 10, **caractérisée en ce qu'**il est prévu en outre une première machine thermoacoustique (100), la conduite (6) pour la chaleur perdue de la centrale (2), destinée à évacuer au moins une partie de la chaleur perdue produite dans la centrale (2), étant reliée à la première machine thermoacoustique (100) et la première machine thermoacoustique (100) étant reliée via une conduite (70) pour la transmission d'une puissance de travail (P) à un compresseur (10) destiné à comprimer l'air et/ou à un autre consommateur.

12. Centrale selon la revendication 11, **caractérisée en ce que**
- la première machine thermoacoustique (100) comprend un premier échangeur de chaleur (110), un deuxième échangeur de chaleur (120) et un premier fluide de transfert de chaleur (170), le premier et le deuxième échangeur de chaleur (110, 120) étant en contact thermique via le premier fluide de transfert de chaleur (170),
- une conduite (111) menant au premier échangeur de chaleur (110) est reliée à la conduite (6) pour la chaleur perdue et
- le deuxième échangeur de chaleur (120) est alimenté via une conduite (121) avec un fluide de refroidissement.

13. Centrale selon la revendication 11 ou 12, **caractérisée en ce qu'**un dispositif de génération de puissance (130) est couplé à la première machine thermoacoustique (100) de façon que des fluctuations de pression du premier fluide de transfert de chaleur (170), en particulier générées par l'effet thermoacoustique, agissent sur le dispositif de génération de puissance (130),
le dispositif de génération de puissance (130) étant conçu pour convertir les fluctuations de pression en une puissance de travail (P).

14. Centrale selon la revendication 13, **caractérisée en ce que** le dispositif de génération de puissance (130)
- est conçu conjointement avec le compresseur (10) sous forme de compresseur linéaire ou
- comprend des composants (131, 132, 134), en particulier un piston (131), un cylindre (132) et un vilebrequin (134), pouvant être entraînés en mouvement par les fluctuations de pression pour générer la puissance de travail (P).

15. Centrale selon la revendication 13 ou 14, **caractérisée en ce que** le dispositif de génération de puissance (130) est relié via une conduite (70) pour la transmission de la puissance de travail (P) au compresseur (10) et/ou à l'autre consommateur.

16. Centrale selon l'une des revendications 10 à 15, **caractérisée en ce qu'**un dispositif d'alimentation en puissance (230) est conçu et couplé à la deuxième machine thermoacoustique (200) de façon à générer des fluctuations de pression dans le deuxième fluide de transfert de chaleur (270) ou à renforcer les fluctuations de pression déjà existantes.

17. Centrale selon la revendication 16, **caractérisée en ce que** le dispositif d'alimentation en puissance (230) est une source sonore ou comprend des composants (231, 232, 234), en particulier un piston (231), un cylindre (232) et un vilebrequin (234), pouvant être entraînés en mouvement pour générer les fluctuations de pression dans le deuxième fluide de transfert de chaleur (230).

18. Centrale selon l'une des revendications 11 à 17, **caractérisée en ce qu'**une sortie du compresseur (10) est reliée via une conduite (60) pour l'air comprimé à une entrée du quatrième échangeur de chaleur (220).
